Europäisches Patentamt

European Patent Office

Office européen des brevets

(11) Veröffentlichungsnummer: **0 317 697**

**A2**

## (12) EUROPÄISCHE PATENTANMELDUNG

(21) Anmeldenummer: 88103671.9

(22) Anmeldetag: 09.03.88

(51) Int. Cl.⁴: **G01N 21/85** , **G01N 35/08** , **G01N 1/14**

(30) Priorität: 23.11.87 DE 3739589

(43) Veröffentlichungstag der Anmeldung:
**31.05.89 Patentblatt 89/22**

(84) Benannte Vertragsstaaten:
**DE FR GB NL SE**

(71) Anmelder: **LEYBOLD AKTIENGESELLSCHAFT**
**Wilhelm-Rohn-Strasse 25**
**D-6450 Hanau 1(DE)**

(72) Erfinder: **Wiegleb, Gerhard**
**Dorfstrasse 3**
**D-8752 Geiselbach(DE)**

(54) **Vorrichtung zum Messen des Fremdstoffanteils in einer strömenden Flüssigkeit.**

(57) Bei einer Vorrichtung zur Bestimmung der Konzentration von Fremdstoffen in einem Wasserstrom wird jeweils vor und nach dem Leitungsblock für den Prozeß ein Flüssigkeitsstrom über Leitungen (8, 9) abgezweigt und jeweils in eine Küvette (16, 17) gefördert, wobei den Küvetten (16, 17) jeweils eine Strahlenquelle (18) zugeordnet ist, deren Strahlenbündel (31, 32) die Küvetten (16, 17) durchdringen und von einem Strahlenteiler (33) jeweils sowohl einem ersten Detektor (19) als auch einem zweiten Detektor (29) zugeleitet werden, wobei die elektrischen Signale der Detektoren (19, 29) von einer elektrischen Schaltung (41 bis 44, 34, 35) miteinander verglichen und zu einem Erkennungssignal verarbeitet werden. Um einen blasenfreien Probenstrom zu ermöglichen, sind in die Rücklaufleitungen (20, 21), die an die Küvetten (16, 17) angeschlossen sind, magnetisch betätigbare Ventile (22, 23) eingeschaltet, wobei die Signale zum Öffnen und Schließen der Ventile (22, 23) von einem Frequenzgenerator (13) erzeugt werden.

EP 0 317 697 A2

## Vorrichtung zum Messen des Fremdstoffanteils in einer strömenden Flüssigkeit

Die Erfindung betrifft eine Vorrichtung zum Messen des Fremdstoffanteils in einer strömenden Flüssigkeit, mit einem für den Prozeß über eine Leitung abgezweigten Flüssigkeitsstrom, der mit Hilfe einer Pumpe in eine Küvette gefördert wird, wobei der Küvette eine Strahlenquelle zugeordnet ist, deren Strahlenbündel die Küvette durchdringt und einem Detektor zugeleitet wird, wobei das elektrische Signal des Detektors von einer elektrischen Schaltung zu einem Erkennungssignal verarbeitet wird nach Patent (Patentanmeldung P 37 33 573.1).

Es sind Vorrichtungen zum Messen der Fremdstoffkonzentration in einem Gasstrom bekannt, die der Prozeßkontrolle in Chemieanlagen, zur Rauchgasmessung und zur Emissionsmessung an Feuerungsanlagen und an Kraftfahrzeugen dienen. Diese bekannten Vorrichtungen arbeiten nach dem nichtdispersiven Ultraviolett-Absorptions-Meßverfahren. Als Meßeffekt dient die spezifische Strahlungsabsorption der Meßkomponente im UV-Bereich.

Die UV-Strahlung wird in einer Hohlkathodenlampe erzeugt. Ein Blendenrad teilt die Strahlung in zwei zeitlich getrennte und ein Strahlenteiler in zwei räumlich getrennte Strahlungen. Auf einen Empfänger trifft dabei der Meßstrahl, der durch die Meßküvette geleitet wird. Der völlig unbeeinflußte Vergleichsstrahl trifft auf den Korrekturempfänger.

Die elektronische Verarbeitung dieser vier Signale eliminiert die Einflußeffekte von nichtselektiven Absorptionen, wie zum Beispiel Küvettenverschmutzung und Alterungseffekte von Strahler und Empfänger.

Der vorliegenden Erfindung liegt die Aufgabe zugrunde, eine Vorrichtung des eingangs genannten Typs so zu verbessern, daß Gasblasen im Probenstrom eliminiert werden. Die Vorrichtung soll preiswert herstellbar sein und vor allem auch nachträglich in bereits vorhandene Anlagen einbaubar sein.

Erfindungsgemäß wird diese Aufgabe dadurch gelöst, daß in die an die Küvette angeschlossene Flüssigkeitsleitung für den Rückstrom ein Ventil eingeschaltet ist, das elektrisch betätigbar ist, wobei das Signal zum schlagartigen Öffnen oder Schließen des Ventils von einem Signalgeber, beispielsweise einem Frequenzgenerator, erzeugbar ist. Weitere Merkmale und Einzelheiten der Erfindung ergeben sich aus den Patentansprüchen.

Die Erfindung läßt die verschiedensten Ausführungsmöglichkeiten zu; eine davon ist in der anhängenden Zeichnung schematisch näher dargestellt, die das Schaltbild für eine Vorrichtung zur laufenden Ermittlung des Benzol-Anteils in durchfließendem Wasser zeigt.

Die Vorrichtung besteht im wesentlichen aus einer vergleichsweise sauberes Eingangswasser führenden Rohrleitung 3, einem für einen Prozeß benötigten, nicht näher dargestellten Rohrleitungsblock, einer aus möglicherweise durch den Prozeß verunreinigte Ausgangswasser führenden Rohrleitung 5, den beiden Zweigleitungen 8, 9 und den in diese eingeschalteten Pumpen 6, 7, den beiden Faserfiltern 10, 11, dem den Faserfiltern 10, 11 nachgeschalteten Wärmetauscher 12, den Zweigleitungen 14, 15, die an die Küvetten 16, 17 angeschlossen sind, der Lichtquelle 18 und den Detektoren 19, 29, den beiden Abflußleitungen 20, 21, den in die Abflußleitungen eingeschalteten Magnetventilen 22, 23 und schließlich dem Frequenzgenerator 13 und der Signalverarbeitung mit den Verstärkern 43, 44 und den Filtern 41, 42.

Die Vorrichtung arbeitet wie folgt: Vom dem Rohrleitungsblock zufließenden Eingangswasser wird aus der Rohrleitung 3 über die Zweigleitung 8 von der Pumpe 6 ein Wasserstrom abgezweigt, der dann in den Faserfilter 10 und von dort aus in den Wärmetauscher 12 gefördert wird. Der vom Faserfilter 10 weitgehend blasenfrei gemachte, temperierte Wasserstrom wird nun durch die Küvette 16 und anschließend in die Abflußleitung 20 gefördert. Gleichzeitig wird vom Ausgangswasser über die Zweigleitung 9 ein zweiter Wasserstrom abgezweigt, der dann von der Pumpe 7 in den Faserfilter 11 und den Wärmetauscher 12 in die zweite Küvette 17 und anschließend in die Abflußleitung 21 gedrückt wird.

Den beiden Küvetten 16, 17 ist eine UV-Lichtquelle 18 zugeordnet, deren Strahlen durch die Küvetten 16, 17 und das in diesen vorhandene Wasser hindurchdringen, da die vorderen und hinteren Stirnwände 25, 26 der Küvetten 16, 17 aus durchscheinendem Werkstoff gefertigt sind.

Zwischen den Küvetten 16, 17 und der UV-Lichtquelle 18 rotiert eine von einem Motor angetriebene Lochscheibe 30 derart, daß die Strahlenbündel 31, 32 abwechselnd auf einen halbdurchlässigen Spiegel 33 fallen, der diese auf die Detektoren 19, 29 lenkt. Den Detektoren 19, 29 ist jeweils ein Lichtfilter 36 bzw. 37 für zum Beispiel 254 nm und 298 nm Wellenlänge vorgeschaltet. Weiterhin sind Sammellinsen 38 bzw. 39 vorgesehen, die die Strahlenbündel 31, 32 auf die Detektoren 19 bzw. 29 lenken. Die von den beiden Detektoren 19, 29 erzeugten elektrischen Signale werden in der elektrischen Schaltung 41 bis 44 zu Signalen aufbereitet, die an den elektrischen Leitern 34, 35 und damit am Anzeigegerät 40 anstehen. Die Schaltung selbst weist RC-Filter 41, 42 und Verstärkerteile 43, 44 auf, die die von den Detektoren 19, 29 gelieferten elektrischen Signale aufbereiten.

Detektoren 19, 29 gelieferten elektrischen Signale aufbereiten.

Während die beiden Wasserströme von den Pumpen 6, 7 gleichmäßig durch die Küvetten 16, 17 gefördert werden, läuft das Chopper-Rad 30 mit gleichbleibender Geschwindigkeit um, so daß pro Chopper-Umdrehung jeweils vier Meßwerte parallel ermittelt werden können.

Der Chopper 30 gibt abwechslungsweise den Strahlengang zwischen Probenseite 17 und Referenzseite 16 frei, während die Signale für die spezifische Absorption und die nichtspezifische Absorption synchron durch die zwei Detektoren 19, 29 ermittelt werden.

Im Bereich der vorstehend beschriebenen fotometrischen Flüssigkeitsanalyse, bei der die zu analysierende Probe durch Analysenküvetten 16, 17 geleitet wird, um die Transmissionsänderungen der Probe zu erfassen, muß eine Blasenbildung innerhalb der Küvetten 16, 17 unterbunden werden. Insbesondere bei der Analyse von Wasser, in der immer ein gewisser Anteil von Luft gelöst ist, ist die Lösung dieses Problems von besonderer Bedeutung.

Bei der beschriebenen Vorrichtung läßt sich durch eine Förderung der zu analysierenden Probe im Druck-Puls-Betrieb die Neubildung von Bläschen erfolgreich verhindern. Blasen, die von dieser Einheit schon vorhanden sind, lassen sich mit einer Nebenstromfiltration 10, 11 entfernen.

Im Ausgang der Küvetten 16, 17 befinden sich Magnetventile 22, 23, die den Durchfluß im Rhythmus der Ansteuerung (~ 1 Hz) unterbrechen. Befindet sich eine Blase in einer der Küvetten, so wird diese Blase durch Adhäsionskräfte an der Küvettenwand festgehalten. Durch Schließen des Ventils 22 bzw. 23 wird diese Blase dann auf ein kleineres Volumen komprimiert. Durch die schlagartige Expansion in einer dritten Phase wird die Blase durch die gleichzeitig sprunghaft ansteigende Strömung mitgerissen, so daß in der letzten Phase keine Blase mehr vorhanden ist.

Blasen, die sich in einem "Totwassergebiet" innerhalb der Küvetten 16, 17 befinden, werden durch diese Maßnahme ebenfalls aus den Küvetten entfernt.

Auflistung der Einzelteile

3 Rohrleitung für Eingangswasser
5 Rohrleitung für Ausgangswasser
6 Pumpe
7 Pumpe

8 Zweigleitung
9 Zweigleitung
10 Faserfilter
11 Faserfilter
12 Wärmetauscher
13 Frequenzgenerator
14 Zweigleitung
15 Zweigleitung
16 Küvette
17 Küvette
18 Lichtquelle
19 Detektor
20 Abflußleitung
21 Abflußleitung
22 Magnetventil
23 Magnetventil
24 UV-Lichtquelle
25 vordere Stirnwand
26 hintere Stirnwand
29 Detektor
30 Lochscheibe, Chopper
31 Strahlenbündel
32 Strahlenbündel
33 halbdurchlässiger Spiegel (Strahlenteiler)
34 elektrischer Leiter
35 elektrischer Leiter
36 Lichtfilter
37 Lichtfilter
38 Sammellinse
39 Sammellinse
40 Anzeigegerät
41 RC-Filter
42 RC-Filter
43 Verstärker
44 Verstärker

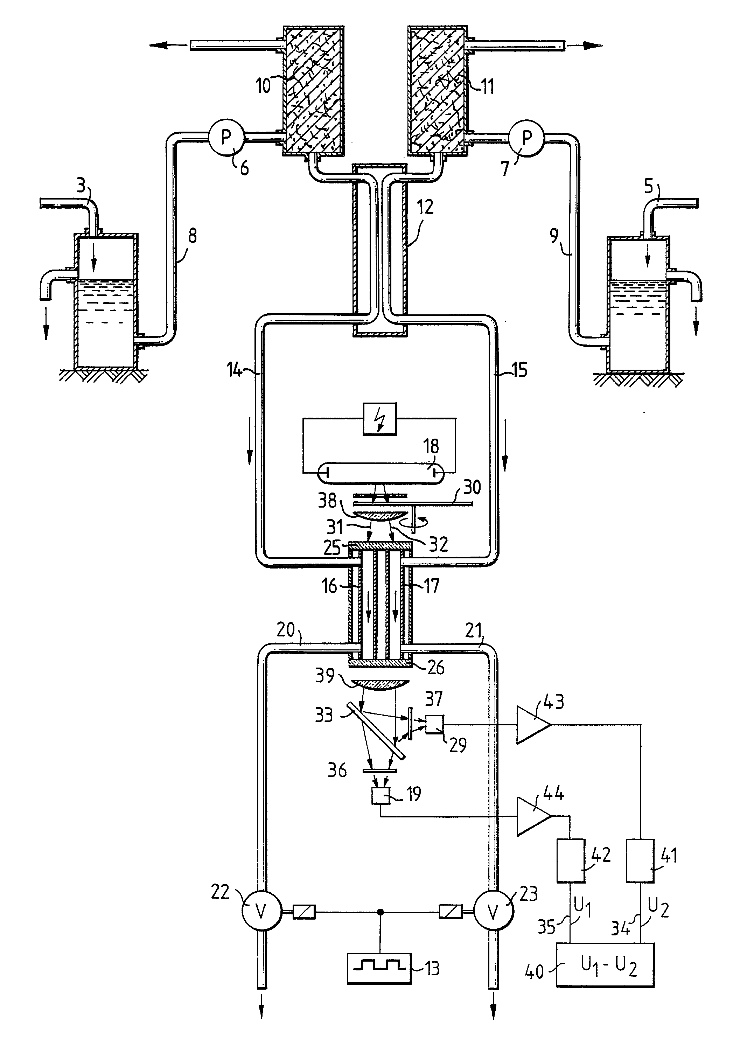

## Ansprüche

1. Vorrichtung zum Messen des Fremdstoffanteils in einer strömenden Flüssigkeit, mit einem für den Prozeß über eine Leitung (14, 15) abgezweigten Flüssigkeitsstrom, der mit Hilfe einer Pumpe (6, 7) in eine Küvette (16, 17) gefördert wird, wobei der Küvette (16, 17) eine Strahlenquelle (18) zugeordnet ist, deren Strahlenbündel (31, 32) die Küvette (16, 17) durchdringt und einem Detektor (19, 29) zugeleitet wird und das elektrische Signal des Detektors (19, 29) von einer elektrischen Schaltung (41 bis 44) zu einem Erkennungssignal verarbeitet wird nach Patent (Patentanmeldung P 37 33 573.1), dadurch gekennzeichnet, daß in die an die Küvette (16, 17) angeschlossene Flüssigkeitsleitung (20, 21) für den Rückstrom ein Ventil (22, 23) eingeschaltet ist, das elektrisch und/oder pneumatisch betätigbar ist, wobei das Signal zum Öffnen oder Schließen des Ventils (22, 23) von einem Signalgeber, beispielsweise einem Frequenzgenerator (13), erzeugbar ist.

2. Vorrichtung nach Anspruch 1, dadurch gekennzeichnet, daß das in die Rücklaufleitung (20, 21) eingeschaltete Ventil (22, 23) in rascher Folge öffnet und schließt, wobei der Durchfluß in der Küvette (16, 17) im Rhythmus der Aussteuerung unterbrochen wird.

3. Vorrichtung nach den Ansprüchen 1 und 2, dadurch gekennzeichnet, daß die Ansteuerung des Ventils (22, 23) im Rhythmus von ~ 1 Hz erfolgt.